# EUROPÄISCHE PATENTSCHRIFT

(11) **EP 2 243 544 B1**
(45) Veröffentlichungstag und Bekanntmachung des Hinweises auf die Patenterteilung: **22.08.2012**
(21) Anmeldenummer: 10004327.2
(22) Anmeldetag: 23.04.2010
(51) Int. Cl.: B01F 3/18, B01F 7/24, B01F 15/00, B01F 15/02, A01K 5/00

(54) **Vorrichtung zum Mischen von Schüttgut**
Device for mixing bulk material
Dispositif de mélange de matière en vrac

(30) Priorität: 24.04.2009 DE 202009004733 U
(43) Veröffentlichungstag der Anmeldung: 27.10.2010
(73) Patentinhaber: Eder GmbH, 83104 Tuntenhausen (DE)
(72) Erfinder: Eckart, Gerhard, 84036 Landshut (DE)
(74) Vertreter: Gustorf, Gerhard

(56) Entgegenhaltungen:
- EP-A1- 1 970 435
- EP-A2- 0 885 559
- DE-A1- 4 022 172
- DE-A1- 4 314 512
- DE-A1- 10 043 852
- DE-A1-102005 006 918
- DE-U1- 8 501 364
- DE-U1- 29 511 311
- DE-U1-202008 014 820

## Beschreibung

Die Erfindung betrifft eine Vorrichtung zum Mischen von Schüttgut nach dem Oberbegriff des Anspruchs 1.

Eine derartige Vorrichtung ist Gegenstand der DE 10 2005 006 918 A1 desselben Erfinders. In der Praxis besteht bei dieser bekannten Vorrichtung der Aufnahmebehälter für das zu mischende Schüttgut aus einem handelsüblichen Container mit einem Aufnahmevolumen von etwa 50 bis 80 m³, der mit einem ebenfalls handelsüblichen Mischbehälter gekoppelt ist, dessen Fassungsvermögen beispielsweise zwischen 5 und 20 m³ beträgt. Beide Behälter sind aus Stahl hergestellt und ruhen auf einer Bodenplatte, die im allgemeinen im Bereich eines landwirtschaftlichen Betriebs oder einer Biogasanlage vorgesehen ist.

Beim Einsatz der bekannten Mischvorrichtung für Biogasanlagen werden die Behälter fast kontinuierlich mit dem Schüttgut befüllt, das nach dem Mischen ebenfalls nahezu kontinuierlich ausgetragen wird. Da das Schüttgut aus verhältnismäßig aggressivem Material besteht und ebenfalls aggressive Gase entwickelt, sind die Stahlwände der Behälter pausenlos diesem Material ausgesetzt, wenn nicht innerhalb mehr oder weniger längerer Intervalle eine Reinigung durchgeführt werden kann. Die Folge ist, dass nach längerer Betriebszeit von nur wenigen Jahren die Stahlwände rosten, sofern sie nicht aus teurem Edelstahl hergestellt sind.

Aus DE 20 2008 014 820 U1 ist ein Mischbehälter eines Futtermischers bekannt, dessen Innenseiten im Verschleißbereich mit einer auswechselbaren Auskleidung belegt sind.

Der Erfindung liegt die Aufgabe zugrunde, eine Vorrichtung der eingangs umrissenen Bauart zur Verfügung zu stellen, bei der auch nach jahrelangem Einsatz derartige Verschleißerscheinungen vermieden werden, die bisher einen vollständigen Austausch der Behälter erforderlich gemacht haben.

Die Lösung dieser Aufgabe ergibt sich aus den Merkmalen des Patentanspruchs 1.

Dabei ist es von Vorteil, wenn in Weiterbildung der Erfindung die Wand- und Bodenelemente aus Beton bestehen. Die verschleißfesten Platten können aus Steingut- oder Keramikfliesen, aus Fliesen aus verschleißfestem Kunststoff oder Glasbausteinen bestehen. Eine Alternative ist es, die verschleißfesten Platten aus rostfreiem Edelstahl, z. B. V2A herzustellen, wobei solche Stahlplatten gegenüber den Stahlwänden des Standes der Technik mit wesentlich geringeren Wandstärken auskommen, weil an diese keine Stabilitätsanforderungen gestellt werden.

Aufgrund der Tatsache, dass die beiden Behälter in Modulbauweise aus Wand- und Bodenelementen zusammengesetzt sind, steht ein Baukastensystem zur Verfügung, das nach Bedarf des Anwenders hinsichtlich seiner Dimensionen maßgeschneidert errichtet und bei Bedarf auch erweitert werden kann. Hinzu kommt, dass die Wand- und Bodenelemente problemlos transportiert werden können, wozu keine Spezialfahrzeuge notwendig sind; die Zusammensetzung und der Aufbau der Vorrichtung kann dann beim Anwender durchgeführt werden.

Wenn die Wand- und Bodenelemente aus Beton bestehen, können diese im Herstellerbetrieb mittels üblicher Schalungen gegossen werden. Die Auskleidung mit verschleißfesten Platten kann entweder bereits im Herstellerbetrieb in einem Arbeitsgang mit dem Betonguss erfolgen oder erst beim Anwender durchgeführt werden. Sollten sich im Lauf der Zeit im Betrieb der Vorrichtung Schäden an den Platten herausstellen, genügt es, nur die davon betroffenen Platten auszutauschen, was ohne großen Aufwand möglich ist.

Das gemäß der Erfindung vorgesehene Baukastensystem erlaubt es, auch größere Anlagen zu errichten, die die eingangs erwähnten Dimensionen des Standes der Technik weit überschreiten. Dabei bietet sich die Möglichkeit, die Behälter, die vorzugsweise aus Betonelementen zusammengesetzt sind, wenigstens teilweise in einer Bodenausschachtung ortsfest aufzustellen, was den weiteren Vorteil hat, dass die über den Boden herausragende Wandhöhe so gewählt werden kann, dass ein bequemes Befüllen des Aufnahmebehälters möglich ist.

Weitere Merkmale und Vorteile der Erfindung ergeben sich aus den Patentansprüchen und aus der folgenden Beschreibung von zwei Ausführungsbeispielen, die in der Zeichnung dargestellt sind. Es zeigen:
Figur 1 einen schematischen Vertikalschnitt in der Ebene II-II (Figur 2) einer Vorrichtung gemäß der Erfindung,
Figur 2 eine Draufsicht auf die in Figur 1 gezeigte Vorrichtung,
Figur 3 eine schematische Schnittdarstellung in der Ebene III-III der Figur 2,
Figur 4 die perspektivische Ansicht einer Variante der Erfindung,
Figur 5 einen Längsschnitt durch die Vorrichtung der Figur 4 und
Figur 6 die Draufsicht auf die Vorrichtung der Figuren 4 und 5.

Die in den Figuren schematisch dargestellte Vorrichtung 10 gemäß der Erfindung dient zum Einfüllen, Mischen und Ausbringen von Schüttgut und findet vorwiegend in der Landwirtschaft Anwendung, um beispielsweise Futter zu mischen und dabei zu zerkleinern oder um den Gärbehälter einer Biogasanlage zu befüllen.

Die Vorrichtung 10 besteht einerseits aus einem Aufnahmebehälter 12 für das zu mischende Schüttgut und andererseits aus einem Mischbehälter 14, von dem ein Austragsorgan 16 für das gemischte Schüttgut nach außen führt.

Im dargestellten Ausführungsbeispiel hat der Aufnahmebehälter 12 die Form eines rechteckigen Kastens, während der Mischbehälter 14 die Form eines etwa halbzylindrischen Topfes hat. Selbstverständlich besteht die Möglichkeit, den Gegebenheiten entsprechend andere Formen für die Behälter vorzusehen, beispielsweise den Aufnahmebehälter 12 ebenfalls teilzylindrisch oder in Draufsicht oval auszubilden.

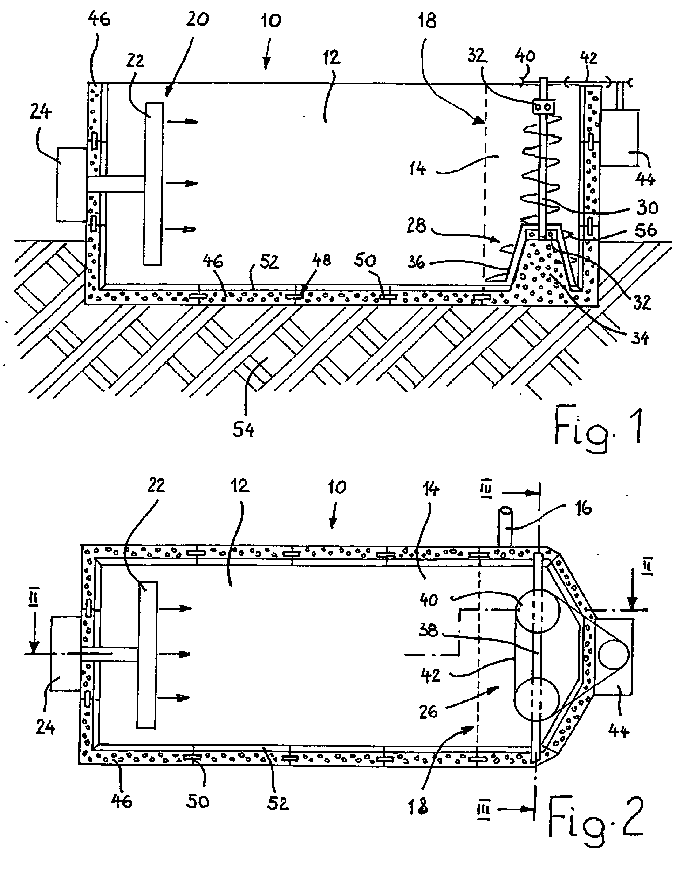

Wie aus DE 10 2005 006 918 an sich bekannt, sind die beiden Behälter 12 und 14 an ihren ineinander übergehenden Seiten offen, wodurch eine Übergabeöffnung 18 von dem Aufnahmebehälter 12 in den Mischbehälter 14 gebildet wird. Dieser Übergabeöffnung 18 gegenüberliegend ist im Aufnahmebehälter 12 ein Förderorgan 20 angeordnet, das dazu dient, das eingefüllte Schüttgut in Richtung der in den Figuren 1 und 2 angedeuteten Pfeile zu der Übergabeöffnung 18 und in den Mischbehälter 14 zu transportieren. Das Förderorgan 20 besteht im Beispiel der Figuren 1 bis 3 aus einem plattenförmigen Schieber 22, der durch einen Hydraulikantrieb 24 horizontal verschoben werden kann.

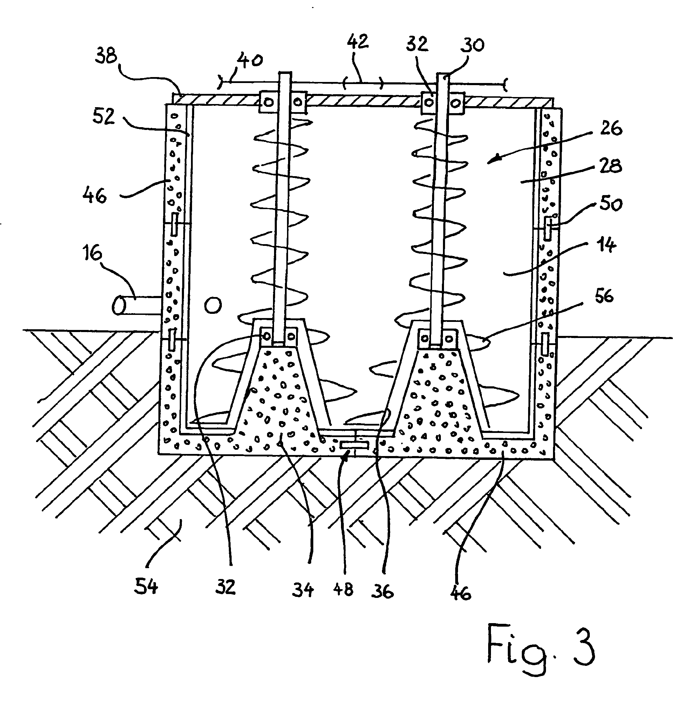

In dem Mischbehälter 14 ist ein insgesamt mit 26 bezeichnetes Mischorgan vorgesehen, das in beiden dargestellten Ausführungsbeispielen aus zwei parallel nebeneinander angeordneten und miteinander kooperierenden Schnecken 28 besteht. Jede Schnecke 28 besteht aus einem unteren, konischen Teil und einem oberen, zylindrischen Teil und hat eine vertikale Antriebswelle 30, die mit ihrem unteren Ende in einem Radiallager 32 abgestützt ist. Dieses in den Figuren 1 bis 3 als Kugellager ausgebildete Radiallager 32 ruht auf einer etwa kegelförmig ausgebildeten Stütze 34, die vom Boden des Mischbehälters 14 nach oben absteht. Am unteren Ende der Antriebswelle 30 ist eine nach unten offene, kegelförmig erweiterte Schutzhaube 36 befestigt, die gemäß Figur 1 sowohl das Radiallager 32 als auch die Stütze 34 überdeckt, so dass das zu mischende Gut nicht in das Radiallager 32 eindringen kann. Wie vor allem Figur 3 zeigt, bildet die Schutzhaube 36 den unteren Innenteil der Schnecke 26, deren Messerwendel 56 an der Schutzhaube 36 befestigt sind.

Das obere Ende der Antriebswelle 30 jeder Schnecke 28 ist ebenfalls über ein Radiallager 32 gelagert, welches hier, wie die Figuren 2 und 3 andeuten, an einer Traverse 38 angebracht ist, die am oberen Ende des Mischbehälters 14 befestigt ist.

Die Figuren 1 bis 3 zeigen weiter, dass jede der beiden Antriebswellen 30 an ihrem oberen Ende ein Antriebsrad 40 in Form einer Riemen- oder Kettenscheibe trägt, die über einen Riemen oder eine Kette 42 von einem Motor 44 angetrieben wird, der im nach oben offenen Bereich des Mischbehälters 14 an dessen Außenseite angebracht ist.

Gemäß der Erfindung sind sowohl der Aufnahmebehälter 12 als auch der Mischbehälter 14 in Modulbauweise aus miteinander verbundenen Wand- bzw. Bodenelementen 46 zusammengesetzt, die in den dargestellten Ausführungsbeispielen aus Beton hergestellt sind. Diese sind, wie in den Figuren 1 und 2 angedeutet, an ihren aneinanderstoßenden Kanten über Formschlusselemente 48 miteinander verbunden, die nach Art von Passfedern als leistenförmige Riegel 50 ausgebildet sind, welche in Aussparungen an den aneinanderstoßenden Kanten der Wand- bzw. Bodenelemente 46 eingreifen. Die Riegel 50 können aus einer Vergussmasse bestehen, die in die Ausnehmungen eingebracht wird, so dass sie nach dem Aushärten eine feste Verbindung zwischen den Wand- bzw. Bodenelementen 46 bildet.

Gemäß der Erfindung ist weiterhin vorgesehen, dass die Innenwände der Wand- und Bodenelemente 46 eine Auskleidung aus verrottfesten und abriebfesten Platten 52 haben, die beispielsweise aus Steingut- oder Keramikfliesen, Fliesen aus verschleißfestem Kunststoff oder flachen Glasbausteinen bestehen. Alternativ können die Platten 52 auch aus einem rostfreien Edelstahl hergestellt sein.

In Figur 1 ist die Möglichkeit dargestellt die gesamte Vorrichtung 10 wenigstens teilweise versenkt im Boden 54 eines Verarbeitungsbetriebs, beispielsweise eines landwirtschaftlichen Betriebs oder einer Biogasanlage unterzubringen. Diese Art des ortsfesten Einbaus hat zudem den Vorteil, dass die Wandhöhe über dem Boden 54 so bemessen werden kann, dass eine leichte Befüllung des Aufnahmebehälters 12 über dessen offene Oberseite möglich ist.

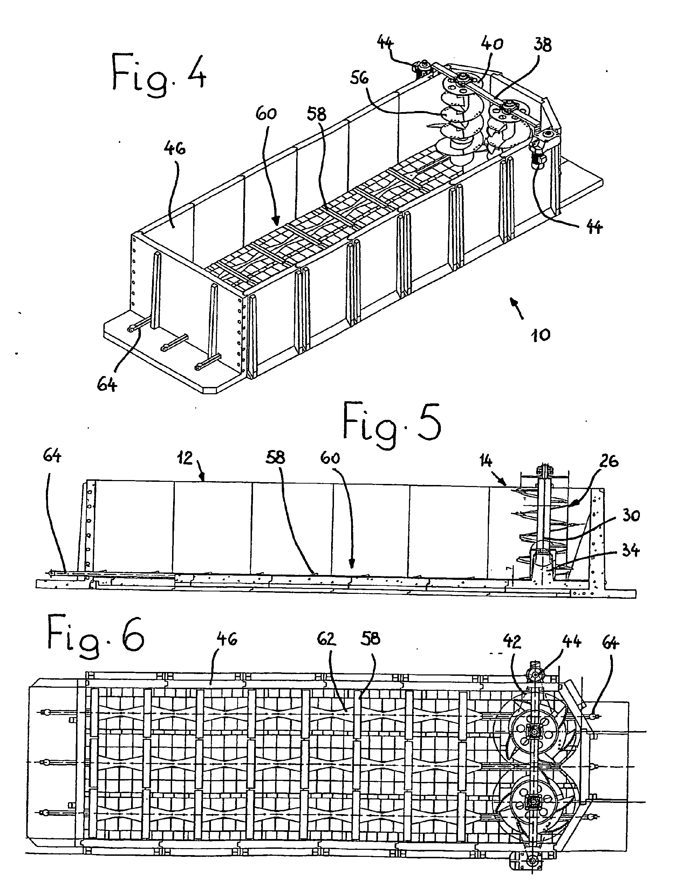

Im Ausführungsbeispiel der Figuren 4 bis 6 besteht das Förderorgan 20 zum Transport des Schüttgutes vom Aufnahmebehälter 12 in den Mischbehälter 14 aus einem Schubboden 60 mit in Querrichtung angeordneten, keilförmigen Mitnehmerelementen 58, die bei der in Figur 6 ersichtlichen Ausführung in drei Reihen nebeneinander an Verbindungselementen 62 angebracht sind. Für die hin- und hergehende Bewegung sind an den Verbindungselementen 62 Antriebsstangen 64 angekoppelt, die außerhalb der Vorrichtung 10 an beiden Enden mit nicht weiter dargestellten Hydraulikzylindern verbunden sind, die die Antriebsstangen 64 nur auf Zug beanspruchen, nicht jedoch auf Druck.

Im Unterschied zum Ausführungsbeispiel der Figuren 1 bis 3 hat jede Antriebswelle 30 der beiden Mischorgane 26 einen eigenen Motor 44.

## Patentansprüche

1. Vorrichtung zum Mischen von Schüttgut, umfassend einen Aufnahmebehälter (12) für das zu mischende Schüttgut und einen durch eine Übergabeöffnung (18) daran anschließenden Mischbehälter (14) mit darin gelagertem Mischorgan (26), wobei in dem Aufnahmebehälter (12) ein Förderorgan (20) zur Übergabe des Schüttgutes aus dem Aufnahmebehälter (12) durch die Übergabeöffnung (18) in den Mischbehälter (14) angeordnet ist und der Mischbehälter (14) Mittel (16) zum Austrag des gemischten Schüttguts aufweist, **dadurch gekennzeichnet, dass** sowohl der Aufnahmebehälter (12) als auch der Mischbehälter (14) in Modulbauweise aus miteinander verbindbaren Wand- und Bodenelementen (46) zusammengesetzt ist, die an ihren aneinanderstoßenden Kanten über Formschlusselemente (48) miteinander verbunden sind, wobei die Innenwände der einzelnen Wand- und Bodenelemente (46) mit verrottfesten und abriebfesten Platten (52) ausgekleidet sind.

2. Vorrichtung nach Anspruch 1, **dadurch gekennzeichnet, dass** die Wand- und Bodenelemente (46) aus Beton bestehen.

3. Vorrichtung nach Anspruch 1 oder 2, **dadurch gekennzeichnet, dass** die verschleißfesten Platten (52) aus Keramikfliesen, Steingutfliesen, Glasbausteinen, Fliesen aus verschleißfestem Kunststoff oder rostfreiem Edelstahl bestehen.

4. Vorrichtung nach einem der vorhergehenden Ansprüche, **dadurch gekennzeichnet, dass** das im Mischbehälter (14) drehbar gelagerte Mischorgan (26) aus wenigstens einer Schnecke (28) mit vertikaler Antriebswelle (30) besteht, deren oberes und unteres Ende Mittel zur Radiallagerung aufweist.

5. Vorrichtung nach Anspruch 4, **dadurch gekennzeichnet, dass** die Schnecke (28) mit dem unteren Ende ihrer Antriebswelle (30) in einem Radiallager (32) abgestützt ist, das auf einer Stütze (34) ruht, die von dem Bodenelement (46) des Mischbehälters (14) nach oben absteht und die zusammen mit dem Radiallager (32) von einer nach unten offenen Schutzhaube (36) abgedeckt ist, die fest mit der Antriebswelle (30) verbunden ist.

6. Vorrichtung nach Anspruch 5, **dadurch gekennzeichnet, dass** an der konisch ausgebildeten Schutzhaube (36) die unteren Messerwendel (56) der Schnecke (28) befestigt sind.

7. Vorrichtung nach Anspruch 5 oder 6, **dadurch gekennzeichnet, dass** das obere Ende der Antriebswelle (30) der Schnecke (28) über einen Riemen- oder Kettentrieb (42) mit einem Antriebsmotor (44) verbunden ist, der im Bereich des oberen Endes der Mischbehälters (14) angebracht ist.

8. Vorrichtung nach Anspruch 7, **dadurch gekennzeichnet, dass** der Antriebsmotor (44) über den Riemen- oder Kettentrieb (42) zwei in dem Mischbehälter (14) nebeneinander angeordnete Schnecken (28) antreibt.

9. Vorrichtung nach einem der vorhergehenden Ansprüche, **dadurch gekennzeichnet, dass** das Förderorgan (20) als Schubboden, Kratzboden oder Förderband ausgebildet ist.

10. Vorrichtung nach Anspruch 9, **dadurch gekennzeichnet, dass** das als Schubboden (60) ausgebildete Förderorgan (20) für eine hin- und hergehende Bewegung mit ausschließlich auf Zug beanspruchten Antriebsstangen (64) verbunden ist.

## Claims

1. Device for mixing bulk material, comprising a storage tank (12) for the material to be mixed and a mixing tank (14) in which a mixer element (26) is mounted, both tanks being interconnected by a transfer port (18), the storage tank (12) being provided with a conveyor (20) for transporting the bulk material from the storage tank (12) through the transfer port (18) into the mixing tank (14), said mixing tank (14) having means (16) for discharching the mixed bulk material, **characterized in that** both the storage tank (12) and the mixing tank (14) are composed of wall and bottom elements (46) to be joined under a modular concept at their contiguous edges by positive locking elements (48), and that the inner side of each wall and bottom element (46) is coated with plates (52) resistant to corrosion and abrasion.

2. Device according to claim 1, wherein the wall and bottom elements (46) are concrete elements.

3. Device according to claim 1 or 2, wherein the plates (52) resistant to wear are made of ceramic tiles, stone ware tiles, glass blocks, wear-resistant synthetic tiles or stainless special steel.

4. Device according to any of the preceding claims, wherein the mixer element (26) rotably mounted in the mixing tank (14) consists of at least one screw (28) having a vertical driving shaft (30) the upper and the lower end of which having radial bearing means.

5. Device according to claim 4, wherein the lower end of the driving shaft (30) of the screw (28) is supported in a radial bearing (32) resting on a post (34) which protrudes from the bottom element (46) of the mixing tank (14) and which is covered, together with said radial bearing (32), by a protecting hood (36) having an open lower side and being firmly connected to said driving shaft (30).

6. Device according to claim 5, wherein the lower cutting spirals (56) of said screw (28) are fastened on the conical protecting hood (36).

7. Device according to claim 5 or 6, wherein the upper end of the driving shaft (30) of said screw (28) is connected, through a belt drive or a chain drive (42), with a motor (44) positioned in the area of the upper end of the mixing tank (14).

8. Device according to claim 7, wherein said motor (44) is provided to drive, by means of said belt or chain drive (42), two screws (28) positioned side by side in said mixing tank (14).

9. Device according to any of the preceding claims, wherein said conveyor (20) is a push frame, a scraper or a conveying belt.

10. Device according to claim 9, wherein the conveyor (20) made up of a push frame is connected to exclusively tensile strained driving rods (64) with reciprocating movement.

## Revendications

1. Dispositif de mélange de matière en vrac, comprenant une caisse de réception (12) de la matière à mélanger et une caisse mélangeuse (14) dans laquelle est logé un mélangeur (26), les deux caisses étant raccordées par une ouverture de transfert (18), et dans la caisse de réception (12) étant logé un convoyeur (20) pour transporter la matière en vrac de la caisse de réception (12) à travers l'ouverture de transfert (18) dans la caisse mélangeuse (14) laquelle est munie de moyens de débit (16) de la matière mélangée, **caractérisé par le fait que** la caisse de réception (12) aussi bien que la caisse mélangeuse (14) sont exécutées en construction modulaire par des éléments de paroi et de fond (46) aptes à être reliés sur leur bords contigus par des éléments de fermeture géométrique (48), les parois internes des éléments de paroi et de fond (46) étant revêtus par des panneaux (52) résistant au pourrissement et à l'abrasion.

2. Dispositif selon la revendication 1, **caractérisé par le fait que** les éléments de paroi et de fond (46) sont en béton.

3. Dispositif selon la revendication 1 ou 2, **caractérisé par le fait que** les panneaux (52) résistent à l'abrasion sont constitués de carreaux céramiques, de carreaux en verre, de carreaux plastiques ou de carreaux en acier spécial inoxydable.

4. Dispositif selon une des revendications précédentes, **caractérisé par le fait que** le convoyeur (20) logé dans la caisse mélangeuse (14) consiste en au moins une vis sans fin (28) avec un arbre moteur vertical (30) dont les extrémités supérieure et inférieure sont munies de paliers radiaux.

5. Dispositif selon la revendication 4, **caractérisé par le fait que** l'extrémité inférieure de l'arbre moteur (30) de la vis sans fin (28) est supportée par un palier radial (32) lui-même reposant sur un support (34) en élévation sur l'élément de fond (46) de la caisse mélangeuse (14), ledit support étant, en même temps que le palier radial (32), recouvert par un capot protecteur (36) ouvert par le bas et solidement fixé sur l'arbre moteur (30).

6. Dispositif selon la revendication 5, **caractérisé par le fait que** les lames en spirale inférieures (56) de la vis sans fin (28) sont fixées au capot protecteur conique (36).

7. Dispositif selon la revendication 5 ou 6, **caractérisé par le fait que** l'extrémité supérieure de l'arbre moteur (30) de la vis sans fin (28) est reliée, à travers une commande par courroie ou par chaîne (42), à un moteur (44) monté dans la zone de l'extrémité supérieure de la caisse mélangeuse (14).

8. Dispositif selon la revendication 7, **caractérisé par le fait que** le moteur (44) est apte à entraîner, à travers le commande par courroie ou par chaîne (42), deux vis sans fin (28) logées l'une à coté de l'autre dans la caisse mélangeuse (14).

9. Dispositif selon une des revendications précédentes, **caractérisé par le fait que** le convoyeur (20) est constitué d'un fond à poussée, d'un fond à raclettes ou d'une bande transporteuse.

10. Dispositif selon la revendication 9, **caractérisé par le fait que** le convoyeur (20) en forme de fond à poussée (60) est relié pour son mouvement de va-et-vient à des tiges de commande (64) soumises exclusivement à la traction.
